(19) Europäisches Patentamt / European Patent Office / Office européen des brevets

(11) **EP 4 451 384 A1**

(12) **EUROPEAN PATENT APPLICATION**
published in accordance with Art. 153(4) EPC

(43) Date of publication:
**23.10.2024 Bulletin 2024/43**

(21) Application number: **23868606.7**

(22) Date of filing: **21.09.2023**

(51) International Patent Classification (IPC):
$H01M\ 4/48$ (2010.01)  $H01M\ 4/38$ (2006.01)
$H01M\ 4/62$ (2006.01)  $H01M\ 10/0525$ (2010.01)
$H01M\ 4/02$ (2006.01)

(52) Cooperative Patent Classification (CPC):
H01M 4/02; H01M 4/38; H01M 4/48; H01M 4/62;
H01M 10/0525

(86) International application number:
**PCT/KR2023/014353**

(87) International publication number:
**WO 2024/063554 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022 KR 20220119283**

(71) Applicant: **LG Energy Solution, Ltd.**
**Seoul 07335 (KR)**

(72) Inventors:
• **LEE, Jaewook**
  **Daejeon 34122 (KR)**
• **KIM, Dohyeun**
  **Daejeon 34122 (KR)**
• **HWANG, Jihee**
  **Daejeon 34122 (KR)**
• **KWON, Yohan**
  **Daejeon 34122 (KR)**
• **KIM, Donghyuk**
  **Daejeon 34122 (KR)**

(74) Representative: **Hoffmann Eitle**
**Patent- und Rechtsanwälte PartmbB**
**Arabellastraße 30**
**81925 München (DE)**

(54) **NEGATIVE ELECTRODE COMPOSITION, NEGATIVE ELECTRODE FOR LITHIUM SECONDARY BATTERY, COMPRISING SAME, AND LITHIUM SECONDARY BATTERY COMPRISING NEGATIVE ELECTRODE**

(57) The negative electrode composition can include a silicon-based active material, a negative electrode conductive material, and a negative electrode binder, wherein the silicon-based active material comprises 70 parts by weight or more of SiOx (x=0) based on 100 parts by weight of the silicon-based active material, and optionally comprises SiOx (0<x<2), wherein the silicon-based active material has a crystal grain size of 200 nm or less, and wherein the negative electrode conductive material comprises a planar conductive material and a linear conductive material.

[Figure 1]

**Description**

[Technical Field]

The present application claims priority to and the benefit of Korean Patent Application No. 10-2022-0119283 filed in the Korean Intellectual Property Office on September 21, 2022, and Korean Patent Application No. 10-2023-0126086 filed in the Korean Intellectual Property Office on September 21, 2023, the entire contents of which are incorporated herein by reference.

The present application relates to a negative electrode composition, a negative electrode for a lithium secondary battery including the same, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, according to the demand for high density energy batteries in recent years, research is being actively conducted on a method for increasing a capacity by using together a silicon-based compound such as Si/C and $SiO_x$ having a capacity 10 times or higher than that of a graphite-based material, as a negative electrode active material. However, as compared with graphite that is typically used, a silicon-based compound that is a high-capacity material has a large capacity but undergoes rapid volume expansion during charging, thereby disconnecting a conductive path to degrade battery characteristics.

Accordingly, in order to address a problem occurring when the silicon-based compound is used as the negative electrode active material, methods of suppressing the volume expansion itself such as a method of controlling a driving potential, a method of additionally further coating a thin film on an active material layer and a method of controlling a particle diameter of a silicon-based compound, or various measures for preventing a conductive path from being disconnected have been discussed. However, the above methods may rather deteriorate the performance of a battery, and thus, the application thereof is limited, so that there is still a limitation in commercializing the manufacture of a negative electrode battery having a high content of a silicon-based compound.

In addition, when manufacturing a negative electrode by using a silicon-based active material in order to increase energy density, it is difficult to implement sufficient cycle performance by using a small amount of a particulate conductive material like in a carbon-based active material system of the related art due to excessive swelling during charging and discharging. Accordingly, if an excessive amount of particulate conductive material is applied, there is room for improvement in life performance, but there is a limit, and problems of increases in slurry viscosity and amount of gas generation at high temperatures due to the high specific surface area of the particulate conductive material occur.

Therefore, there is a need for researches on a conductive material system capable of preventing a conductive path from being damaged due to volume expansion of a silicon-based compound even when the silicon-based compound is used as an active material in order to improve capacity performance, and suitable for a grain silicon-based active material that is a high-capacity negative electrode material.

Prior Art Document

(Patent Literature 1) Japanese Patent Application Publication No. 2009-080971

[Detailed Description of the Invention]

[Technical Problem]

As a result of researches on a conductive material system in order to reduce an amount of gas generation at high temperatures in view of the aforementioned problems, it was found that when planar (bulk) and linear conductive materials, instead of using the particulate conductive material, are applied to a silicon-based active material that satisfies a certain crystal grain size, electrical connectivity can be improved and an electrical isolation phenomenon can be prevented.

Accordingly, the present application relates to a negative electrode composition, a negative electrode for a lithium secondary battery including the same, and a lithium secondary battery including a negative electrode.

[Technical Solution]

An exemplary embodiment of the present specification provides a negative electrode composition including a silicon-based active material; a negative electrode conductive material; and a negative electrode binder, wherein the silicon-based active material includes one or more selected from the group consisting of SiOx (x=0) and SiOx (0<x<2), and includes 70 parts by weight or more of SiOx (x=0) on the basis of 100 parts by weight of the silicon-based active material, wherein the silicon-based active material has a crystal grain size of 200 nm or less, and wherein the negative electrode conductive material includes a planar conductive material and a linear conductive material.

Another exemplary embodiment of the present invention provides a negative electrode for a lithium secondary battery including a negative electrode current collector layer; and a negative electrode active material layer including the negative electrode composition according to the present application formed on one surface or both surfaces of the negative electrode current collector layer.

Finally, there is provided a lithium secondary battery including a positive electrode; the negative electrode for a lithium secondary battery according to the present application; a separator provided between the positive electrode and the negative electrode; and an electrolyte.

[Advantageous Effects]

The negative electrode composition according to an exemplary embodiment of the present invention uses the grain silicon-based active material within a specific range for increase in energy density to fabricate a negative electrode. In this case, for the negative electrode conductive material, the planar conductive material and the linear conductive material are used to greatly improve the electrical connectivity between the silicon-based active materials, resulting in preventing the electrical isolation phenomenon, which may occur when charging/discharging the negative electrode to which the silicon-based active material is applied, to improve the life of the negative electrode.

In the case of negative electrodes for which existing carbon-based active materials are used, a small amount of particulate conductive material is used as the negative electrode conductive material. However, if such a particulate conductive material is applied to the silicon-based active material of the present invention, it is difficult to implement sufficient cycle performance. If an excessive amount of particulate conductive material is included, there is room for improvement in life performance, but problems of increases in slurry viscosity and amount of gas generation at high temperatures due to the high specific surface area occur. That is, the main feature of the negative electrode composition according to the present application is that the negative electrode conductive material having specific composition and content as described above is applied without using the particulate conductive material, leading to the construction of a system that can be applied together with the silicon-based active material with a high energy density.

[Brief Description of Drawings]

FIG. 1 is a view showing a stack structure of a negative electrode for a lithium secondary battery according to an exemplary embodiment of the present application.
FIG. 2 is a view showing a stack structure of a lithium secondary battery according to an exemplary embodiment of the present application.
FIG. 3 is an enlarged view of a silicon-based active material according to an exemplary embodiment of the present application.

<Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle diameter distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode composition including a silicon-based active material; a negative electrode conductive material; and a negative electrode binder, wherein the silicon-based active material has a crystal grain size of 200 nm or less, and wherein the negative electrode conductive material includes a planar conductive material and a linear conductive material.

An exemplary embodiment of the present specification provides a negative electrode composition including a silicon-based active material; a negative electrode conductive material; and a negative electrode binder, wherein the silicon-based active material includes one or more selected from the group consisting of SiOx (x=0) and SiOx (0<x<2), and includes 70 parts by weight or more of SiOx (x=0) on the basis of 100 parts by weight of the silicon-based active material, wherein the silicon-based active material has a crystal grain size of 200 nm or less, and wherein the negative electrode conductive material includes a planar conductive material and a linear conductive material.

In an exemplary embodiment of the present application, there is provided the negative electrode composition in which the silicon-based active material includes one or more selected from the group consisting of SiOx (x=0) and SiOx (0<x<2) and includes 70 parts by weight or more of SiOx (x=0) on the basis of 100 parts by weight of the silicon-based active material.

In another exemplary embodiment, the silicon-based active material may include SiOx (x=0) in an amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-based active material.

In an exemplary embodiment of the present application, for the silicon-based active material, particularly, pure silicon (Si) particles may be used as a silicon-based active material. The use of pure silicon (Si) particles as the silicon-based active material may mean that, on the basis of 100 parts by weight of the total silicon-based active material as described above, pure Si particles (SiOx (x=0)) not bonded to other particles or elements are included within the above range.

In an exemplary embodiment of the present application, the silicon-based active material may be composed of silicon-based particles having 100 parts by weight of SiOx (x=0).

In an exemplary embodiment of the present application, the silicon-based active material may include a metal impurity, and in this case, the impurity is metal that may be generally included in the silicon-based active material, and specifically, a content thereof may be 0.1 part by weight or less on the basis of 100 parts by weight of the silicon-based active material.

The capacity of the silicon-based active material is significantly higher than that of a graphite-based active material that is typically used, so that there have been more attempts to apply the same. However, the volume expansion rate of the silicon-based active material during charging/discharging is high, so that, for example, only a small amount thereof is mixed and used with a graphite-based active material.

However, the negative electrode composition according to the present invention includes a silicon-based active material whose crystal grain size satisfies a range described below and also includes specific planar conductive material and linear conductive material, thereby improving the life performance of the negative electrode and reducing an amount of gas generation at high temperatures.

In an exemplary embodiment of the present application, the crystal grain size of the silicon-based active material may be 200 nm or less.

In the present application, the crystal grain size of the silicon-based active material may be 10 nm or greater and 150 nm or less.

In another exemplary embodiment, the crystal grain size of the silicon-based active material may be 200 nm or less, preferably 130 nm or less, more preferably 110 nm or less, still more preferably 100 nm or less, specifically 95 nm or less, and more specifically 91 nm or less. The crystal grain size of the silicon-based active material may have a range of 10 nm or greater, and preferably 15 nm or greater or 30 nm or greater.

The silicon-based active material has the crystal grain size described above, and the crystal grain size of the silicon-based active material may be controlled by changing a process condition in a manufacturing process. In this case, when the above range is satisfied, the crystal grain boundaries are widely distributed, and thus, the lithium ions can be uniformly intercalated during intercalating of lithium ions, thereby reducing the stress applied during intercalating of lithium ions into the silicon particles, and accordingly, mitigating breakage of the particles. As a result, characteristics capable of improving the life stability of the negative electrode are obtained. If the crystal grain size exceeds the above range, the crystal grain boundaries within the particles are narrowly distributed, and in this case, lithium ions are non-uniformly intercalated into the particles, leading to large stress during the intercalating of ions, and accordingly, breakage of particles.

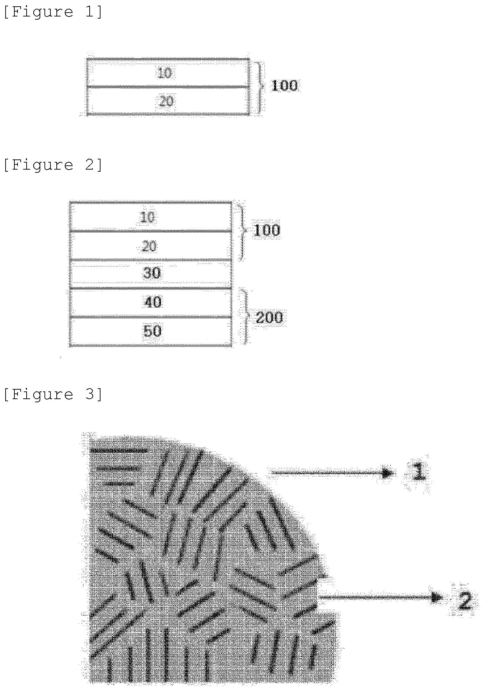

FIG. 3 is an enlarged view of a silicon-based active material according to an exemplary embodiment of the present application. Specifically, the silicon-based active material 1 is composed of a plurality of crystal structures 2, and in this case, it can be confirmed that the crystal structure has a crystal grain distribution of 1 nm or greater and 200 nm or less. In addition, a space between crystal structures may be defined as a crystal grain boundary. Also, in general, the crystal structure can be expressed as crystal grains.

In an exemplary embodiment of the present application, there is provided the negative electrode active material in which the silicon-based active material includes a crystal structure having a crystal grain distribution of 1 nm or greater and 200 nm or less, and an area ratio of the crystal structure based on a total area of the silicon-based active material is 5% or less.

In another exemplary embodiment, the area ratio of the crystal structure based on the total area of the silicon-based active material may be 5% or less, or 3% or less, and 0.1% or greater.

That is, the silicon-based active material according to the present application has a crystal grain size of 200 nm or less, is formed so that the size of one crystal structure is small, and may satisfy the above area ratio. Accordingly, the distribution of the crystal grain boundaries may be widened, and accordingly, the above-described effects may be exhibited.

In an exemplary embodiment of the present application, there is provided the negative electrode active material in which the number of the crystal structures included in the silicon-based active material is 20 or more.

In another exemplary embodiment, the number of crystal structures included in the silicon-based active material may satisfy a range of 20 or more, 30 or more, or 35 or more, and 60 or less or 50 or less.

That is, as described above, when the crystal grain size of the silicon-based active material satisfies the above range and the number of crystal structures satisfies the above range, the silicon-based active material itself has strength within an appropriate range. Therefore, when such a silicon-based active material is included in an electrode, flexibility can be imparted, and volume expansion can be effectively suppressed.

In the present application, the crystal grain refers to a crystal particle in a metal or material, which is a collection of microscopically irregular shapes, and the crystal grain size may mean a diameter of the observed crystal grain particle. That is, in the present application, the crystal grain size means a size of a domain sharing the same crystal direction in a particle, and has a different concept from a particle size or a size of a particle diameter expressing a size of a material.

In an exemplary embodiment of the present application, the crystal grain size can be calculated as a value of full width at half maximum (FWHM) through XRD analysis. The remaining values except L are measured through XRD analysis of the silicon-based active material, and the crystal grain size can be measured through the Debey-Scherrer equation showing that the FWHM and the crystal grain size are in inverse ratio. The Debey-Scherrer equation is as shown in Equation 1-1 below.

$$[Equation\ 1\text{-}1]$$

$$FWHM = K\lambda / LCos\theta$$

in Equation 1-1,

L is a crystal grain size, K is a constant, $\theta$ is a Bragg angle, and $\lambda$ is a wavelength of X-ray.

In addition, the shapes of the crystal grains are diverse and can be measured in three dimensions. In general, the size of the crystal grain can be measured by a generally used circle method or diameter measurement method, but the present invention is not limited thereto.

In the diameter measurement method, the size of the crystal grain can be measured by drawing 5 to 10 parallel lines each having a length of L mm on a micrograph of a target particle, counting the number of crystal grains z on each line, and averaging them. In this case, only crystal grains that are wholly included on the line are counted, and crystal grains that are partially put (laid across) on the line are excluded. If the number of lines is P and the magnification is V, the average particle diameter can be calculated by Equation 1-2 below.

$$[Equation\ 1\text{-}2]$$

$$Dm = (L*P*10^3)/(zV)\ (\mu m)$$

In addition, the circle method is a method in which a circle with a predetermined diameter is drawn on a micrograph of a target particle, and then an average area of crystal grains is calculated by the number of crystal grains in the circle and the number of crystal grains laid across the boundary line, and the average area can be calculated by Equation 1-3 below.

$$[Equation\ 1\text{-}3]$$

$$Fm = (Fk\ *\ 10^6)\ /\ ((0.67n\ +\ z)\ V^2)\ (\mu m^2)$$

In Equation 1-3, Fm is an average particle area, Fk is a measurement area on the photograph, z is the number of particles in a circle, n is the number of particles laid across the circle, and V is a magnification of a microscope.

In an exemplary embodiment of the present application, the silicon-based active material whose specific surface area is 0.25 $m^2/g$ or greater may be included.

In another exemplary embodiment, the silicon-based active material may have a specific surface area of 0.25 $m^2/g$ or greater, preferably 0.28 $m^2/g$ or greater, and more preferably 0.30 $m^2/g$ or greater, specifically 0.31 $m^2/g$ or greater, and more specifically 0.32 $m^2/g$ or greater. The silicon-based active material may satisfy a range of a specific surface area of 3 $m^2/g$ or less, preferably 2.5 $m^2/g$ or less, and more preferably 2.2 $m^2/g$ or less. The specific surface area may be measured according to DIN 66131 (using nitrogen).

In an exemplary embodiment of the present application, the negative electrode active material may include a silicon-based active material having a specific surface area of 0.30 $m^2/g$ or greater and 4.00 $m^2/g$ or less.

In another exemplary embodiment, the silicon-based active material may have a specific surface area of 0.30 $m^2/g$ or greater, preferably 0.31 $m^2/g$ or greater, and more preferably 0.32 $m^2/g$ or greater. The silicon-based active material may satisfy a range of a specific surface area of 4.00 $m^2/g$ or less, preferably 2.50 $m^2/g$ or less, and more preferably 2.20 $m^2/g$ or less.

The silicon-based active material has the specific surface area described above, and the specific surface area of the silicon-based active material may be controlled by changing a process condition of a manufacturing process and a growth condition of the silicon-based active material. That is, when the negative electrode active material is manufactured using the manufacturing method according to the present application, the rough surface results in a larger specific surface area, as compared with particles with the same particle size. In this case, the above range is satisfied, and thus, the bonding force with the binder increases, leading to reduction in cracks of an electrode due to repeating charge and discharge cycles.

In addition, the lithium ions can be uniformly intercalated during intercalation of lithium ions, resulting in reduction in stress applied during intercalation of lithium ions into the silicon particles, and accordingly, reduction in breakage of the particles. As a result, characteristics capable of improving the life stability of the negative electrode are obtained. If the specific surface area is less than the above range, the surface is formed smooth even with the same particle size, resulting in a decrease in the bonding force with the binder, and cracks of the electrode. In this case, lithium ions are non-uniformly intercalated into the particles, resulting in an increase in the stress due to the ion intercalation, and breakage of particles.

In an exemplary embodiment of the present application, the silicon-based active material may satisfy a range in Equation 2-1 below.

$$[Equation\ 2-1]$$

$$X1/Y1 \leq 0.960$$

in Equation 2-1,

X1 refers to an actual area of the silicon-based active material, and
Y1 refers to an area of a spherical particle with the same circumference as the silicon-based active material.

The measurement of Equation 2-1 above may be performed using a particle shape analyzer. Specifically, the silicon-based active material according to the present application may be scattered on a glass plate through air injection, and then a shape of 10,000 silicon-based active material particles in a photograph obtained by capturing a shadow image of the scattered silicon-based active material particles may be measured. In this case, Equation 2-1 is a value expressing an average of 10,000 particles. Equation 2-1 according to the present application can be measured from the above image, and Equation 2-1 can be expressed as sphericity (circularity) of the silicon-based active material. The sphericity may also be expressed by Equation [$4\pi$*actual area of silicon-based active material/(circumference)$^2$].

In an exemplary embodiment of the present application, the sphericity of the silicon-based active material may be, for example, 0.960 or less, for example, 0.957 or less. The sphericity of the silicon-based active material may be 0.8 or higher, for example, 0.9 or higher, specifically 0.93 or higher, more specifically 0.94 or higher, for example, 0.941 or higher.

In an exemplary embodiment of the present application, the silicon-based active material may satisfy a range in Equation 2-2 below.

$$[Equation\ 2-2]$$

$$X2/Y2 \leq 0.996$$

in Equation 2-2,

Y2 refers to an actual circumference of the silicon-based active material, and
X2 refers to a circumference of a figure circumscribed to the silicon-based active material.

The measurement of Equation 2-2 above may be performed using a particle shape analyzer. Specifically, the silicon-based active material according to the present application may be scattered on a glass plate through air injection, and then a shape of 10,000 silicon-based active material particles in a photograph obtained by capturing a shadow image of the scattered silicon-based active material particles may be measured. In this case, Equation 2-2 is a value expressing an average of 10,000 particles. Equation 2-2 according to the present application can be measured from the above image, and Equation 2-2 can be expressed as convexity of the silicon-based active material.

In an exemplary embodiment of the present application, a range of X2/Y2≤0.996, preferably X2/Y2≤0.995 may be satisfied, and a range of 0.8≤X2/Y2, preferably 0.9≤X2/Y2, more preferably 0.95≤X2/Y2, specifically 0.98≤X2/Y2 may be satisfied.

The smaller the value of Equation 2-1 or Equation 2-2, the greater the roughness of the silicon-based active material may be meant. As the silicon-based active material with the above range is used, the bonding force with the binder increases, leading to reduction in cracks of the electrode due to the repeating of the charge/discharge cycle.

An average particle diameter (D50) of the silicon-based active material of the present invention may be 3 um to 10 um, specifically 5.5 um to 8 $\mu$m, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density nonuniformity phenomenon during charging and discharging can be prevented.

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In an exemplary embodiment of the present application, there is provided the negative electrode composition in which the silicon-based active material is included in an amount of 60 parts by weight or more on the basis of 100 parts by weight of the negative electrode composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 85 parts by weight or less, on the basis of 100 parts by weight of the negative electrode composition.

The negative electrode composition according to the present application uses the binder and specific conductive material capable of controlling the volume expansion rate during charging and discharging even when the silicon-based active material having a significantly high capacity is used within the above range. Accordingly, even when the silicon-based active material is within the above range, the negative electrode composition does not degrade the performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the circularity is determined by Equation 3-1 below, in which A is an area and P is a boundary line.

$$[Equation\ 3\text{-}1]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Therefore, the negative electrode conductive material according to an exemplary embodiment of the present application may include a planar conductive material and a linear conductive material.

As described above, the negative electrode conductive material includes a planar conductive material and a linear conductive material, greatly improving electrical connectivity between the silicon-based active material particles and preventing isolation of the silicon-based active material particles during charging/discharging to improve the life performance of the negative electrode.

In an exemplary embodiment of the present application, the negative electrode conductive material may include a planar conductive material.

The planar conductive material can improve conductivity by increasing surface contact between silicon particles in the negative electrode and at the same time suppress the disconnection of the conductive path due to the volume expansion, and may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 um or greater and 1.5 um or less, D50 of 2.5 um or greater and 6.0 um or less, and D90 of 7.0 um or greater and 15.0 um or less.

In an exemplary embodiment of the present application, the planar conductive material may be a graphite-based plate-like material.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 $m^2$/g or greater.

In another exemplary embodiment, the planar conductive material may have a BET specific surface area of 5 $m^2$/g or greater and 500 $m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may satisfy a range of 5 $m^2$/g or greater and 40 $m^2$/g or less, preferably 5 $m^2$/g or greater and 30 $m^2$/g or less, and more preferably 5 $m^2$/g or greater and 25 $m^2$/g or less.

In the present application, a thickness of the planar conductive material may satisfy a range of 0.5 um or greater and 2 um or less.

In the present application, the planar conductive material may satisfy a ratio of D50 to the thickness of 20% or greater and 30% or less. In this case, the ratio of D50 to the thickness can be expressed as (thickness of planar conductive material/D50 of planar conductive material) x 100%.

As the planar conductive material as described above is used, output characteristics at high C-rate are excellent because the life characteristics of the lithium secondary battery are not greatly affected and points where the battery can be charged and discharged are increased.

In an exemplary embodiment of the present application, the linear conductive material may include a linear conductive material such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the linear conductive material may be an SWCNT or an MWCNT.

In the exemplary embodiment of the present application, the linear conductive material may be SWCNT.

In an exemplary embodiment of the present application, an average particle diameter of the linear conductive material may be 1 um or greater and 5 um or less.

In an exemplary embodiment of the present application, the linear conductive material may have a BET specific surface area of 500 $m^2/g$ or greater and 1500 $m^2/g$ or less.

In an exemplary embodiment of the present application, a Raman IG/ID of the linear conductive material may satisfy a range of 100 or greater and 150 or less.

The negative electrode conductive material according to an exemplary embodiment of the present application may include 90 parts by weight or more and 99.9 parts by weight or less of the planar conductive material and 0.1 part by weight or more and 10 parts by weight or less of the linear conductive material on the basis of 100 parts by weight of the negative electrode conductive material.

In another exemplary embodiment, the negative electrode conductive material may include 90 parts by weight or more and 99.9 parts by weight or less, preferably 92 parts by weight or more and 99.9 parts by weight or less, and more preferably 93 parts by weight or more and 98 parts by weight or less of the planar conductive material on the basis of 100 parts by weight of the negative electrode conductive material.

In another exemplary embodiment, the negative electrode conductive material may include 0.1 part by weight or more and 10 parts by weight or less, preferably 0.1 part by weight or more and 8 parts by weight or less, and more preferably 0.5 part by weight or more and 7 parts by weight or less of the linear conductive material on the basis of 100 parts by weight of the negative electrode conductive material.

The negative electrode conductive material according to the present application does not include a particulate conductive material such as carbon black. If a particulate conductive material is used, there is room for improvement in life performance, but there is a limit. If an excessive amount of a particulate conductive material is used, problems of increases in negative electrode slurry viscosity and amount of gas generation at high temperatures due to the high specific surface area of the particulate conductive material occur.

Accordingly, the negative electrode composition of the present application does not use a particulate conductive material, but includes both the planar conductive material and the linear conductive material within the contents described above, thereby reducing the viscosity of the negative electrode slurry including the same and the high-temperature gas storage amount.

In an exemplary embodiment of the present application, there is provided the negative electrode composition in which a volume resistance ($\Omega \cdot cm@1g/cc$) of the linear conductive material is 0.0005 or greater and 0.003 or less.

The linear conductive material satisfies the above volume resistance, thereby improving the conductivity of the negative electrode including the same. That is, it corresponds to a factor representing the electric network maintenance performance of the linear conductive material.

In the exemplary embodiment of the present application, there is provided the negative electrode composition in which the negative electrode conductive material is included in an amount of 10 parts by weight or more and 40 parts by weight or less on the basis of 100 parts by weight of the negative electrode composition.

In another exemplary embodiment, the negative electrode conductive material may be included in an amount of 10 parts by weight or more and 40 parts by weight or less, preferably 10 parts by weight or more and 30 parts by weight or less, and more preferably 15 parts by weight or more and 25 parts by weight or less on the basis of 100 parts by weight of the negative electrode composition.

In an exemplary embodiment of the present application, as the negative electrode conductive material includes the planar conductive material and the linear conductive material and the composition and ratio described above are satisfied, respectively, the life characteristics of an existing lithium secondary battery are not significantly affected, and the number of points where the battery can be charged and discharged increases, so that output characteristics are excellent at a high C-rate.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed and used into a spherical or particulate shape so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a negative electrode conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, the use of a carbon-based active material as an active material means that the carbon-based active material is processed into a particulate or spherical shape and used as a material for storing or releasing lithium.

That is, artificial graphite or natural graphite, which is a carbon-based active material, may have a BET specific surface area that satisfies a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylenepropylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, and more preferably 20 parts by weight or less, and 5 parts by weight or more, or 10 parts by weight or more, on the basis of 100 parts by weight of the negative electrode composition.

Compared to existing carbon-based negative electrodes, when a Si-based negative electrode is used, an aqueous binder is applied in parts by weight described above, allowing the use of a negative electrode conductive material with a low functional group content. In addition, the above characteristics allows the negative electrode conductive material to have hydrophobicity and the excellent bond strength between the conductive material/binder.

In an exemplary embodiment of the present application, there is provided a negative electrode for a lithium secondary battery including: a negative electrode current collector layer; and a negative electrode active material layer including the negative electrode composition according to the present application formed on one surface or both surfaces of the negative electrode current collector layer.

FIG. 1 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface of the negative electrode current collector layer, but the negative electrode active material layer may be formed on both surfaces of the negative electrode current collector layer.

In an exemplary embodiment of the present application, the negative electrode current collector layer generally has a thickness of 1 um to 100 um. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, the negative electrode for a lithium secondary battery may be formed by applying and drying a negative electrode slurry including the negative electrode composition to one surface or both surfaces of the negative electrode current collector layer.

In an exemplary embodiment of the present application, there is provided the negative electrode composition in which the viscosity of the negative electrode composition is 1,000 cP or higher and 6,000 cP or less.

In this case, the negative electrode slurry may include the negative electrode composition described above, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode composition is minimized to efficiently form the negative electrode active material layer. In addition, as the negative electrode composition includes the specific conductive material described above, the increase in viscosity can be suppressed and the dispersibility of the negative electrode slurry can be improved.

In an exemplary embodiment of the present application, the viscosity of the negative electrode slurry may be 1,000 cP or higher and 8,000 cP or less.

In another exemplary embodiment, the viscosity of the negative electrode slurry may satisfy a range of 1,000 cP or higher and 8,000 cP or less, preferably 1,500 cP or higher and 6,000 cP or less, and more preferably 2,000 cP or higher and 4,000 cP or less.

In an exemplary embodiment of the present application, there is provided the negative electrode for a lithium secondary battery in which a thickness of the negative electrode current collector layer is 1 um or greater and 100 $\mu$m or less and a thickness of the negative electrode active material layer is 20 um or greater and 500 um or less.

However, the thickness may be variously modified depending on a type and use of the negative electrode used, and is not limited thereto.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, conductive material and binder included in the negative electrode active material layer, and in particular, satisfies the range described above when the silicon-based active material according to the present application and the conductive material are included in the specific compositions and contents, so that the electrode has electrical conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stack structure with a separator 30 interposed therebetween.

The secondary battery according to the exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 um, and a surface of the current collector may be formed with microscopic irregularities to enhance adhesion of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In the exemplary embodiment of the present application, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 um or greater.

For example, the average particle diameter (D50) of the single particles may be 1 um or greater and 12 um or less, 1 um or greater and 8 um or less, 1 um or greater and 6 um or less, greater than 1 um and 12 um or less, greater than 1 um and 8 um or less, or greater than 1 um and 6 um or less.

Even when the single particles are formed with a small average particle diameter (D50) of 1 um or greater and 12 um or less, the particle strength may be excellent. For example, the single particle may have a particle strength of 100 to 300 MPa when roll-pressing with a force of 650 kgf/cm$^2$. Accordingly, even when the single particles are roll-pressed with a strong force of 650 kgf/cm$^2$, the phenomenon of increased micro-particles in an electrode due to particle breakage is alleviated, thereby improving the lifetime characteristic of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than a temperature during manufacture of the secondary particles. For example, when the composition of the precursor is the same, the firing should be performed at a temperature about 30°C to 100°C higher than a temperature during manufacture of the secondary particles. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material including a lithium composite transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from aggregation of tens to hundreds of primary particles, and is a concept including a single particle consisting of one primary particle and a quasi-single particle form that is an aggregate of 30 or less primary particles.

Specifically, in the present invention, the single particle may be a single particle consisting of one primary particle or a quasi-single particle form that is an aggregate of 30 or less primary particles, and the secondary particle may be an aggregate form of hundreds of primary particles.

In the exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an aggregate of 30 or less primary particles, and the secondary particle may be an aggregate form of hundreds of primary particles.

The above-described lithium composite transition metal compound may further include secondary particles. The secondary particle means a form formed by aggregation of primary particles, and can be distinguished from the concept of a single particle including one primary particle, one single particle and a quasi-single particle form, which is an aggregate of 30 or less primary particles.

The secondary particle may have a particle diameter (D50) of 1 um to 20 um, 2 um to 17 $\mu$m, and preferably 3 um to 15 um. The specific surface area (BET) of the secondary particles may be 0.05 $m^2$/g to 10 $m^2$/g, preferably 0.1 $m^2$/g to 1 $m^2$/ g, and more preferably 0.3 $m^2$/g to 0.8 $m^2$/g.

In a further exemplary embodiment of the present application, the secondary particle is an aggregate of primary particles, and the average particle diameter (D50) of the primary particles is 0.5 um to 3 um. Specifically, the secondary particle may be an aggregate form of hundreds of primary particles, and the average particle diameter (D50) of the primary particles may be 0.6 um to 2.8 um, 0.8 um to 2.5 um, or 0.8 um to 1.5 um.

When the average particle diameter (D50) of the primary particles satisfies the above range, a single-particle positive electrode active material having excellent electrochemical properties can be formed. If the average particle diameter (D50) of the primary particles is too small, the number of aggregates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present application, the average particle diameter (D50) of the single particles is smaller than the average particle diameter (D50) of the secondary particles. As a result, the single particles may have excellent particle strength even if they are formed with a small particle diameter, and accordingly, the phenomenon of increased micro-particles in an electrode due to particle breakage is alleviated, thereby improving the lifetime characteristic of the battery.

In the exemplary embodiment of the present application, the average particle diameter (D50) of the single particles is smaller than the average particle diameter (D50) of the secondary particles by 1 um to 18 um. For example, the average particle diameter (D50) of the single particles may be 1 um to 16 um smaller, 1.5 um to 15 um smaller, or 2 um to 14 um smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, the phenomenon of increased micro-particles in an electrode due to particle breakage is alleviated, thereby improving the lifetime characteristic and the energy density of the battery.

According to a further exemplary embodiment of the present application, the single particles are included in an amount of 15 parts by weight to 100 parts by weight on the basis of 100 parts by weight of the positive electrode active material. The single particles may be included in an amount of 20 parts by weight to 100 parts by weight, or 30 parts by weight to 100 parts by weight on the basis of 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more on the basis of 100 parts by weight of the positive electrode active material. The single particles may be included in an amount of 100 parts by weight or less on the basis of 100 parts by weight of the positive electrode active material.

When the single particles are included within the above range, excellent battery characteristics may be exhibited in combination with the negative electrode material described above. In particular, when the single particles are included in an amount of 15 parts by weight or more, the phenomenon of increased micro-particles in an electrode due to particle breakage in a roll-pressing process after fabrication of an electrode can be alleviated, thereby improving the lifetime characteristics of the battery.

In the exemplary embodiment of the present application, the lithium composite transition metal compound may further include secondary particles, and the secondary particles may be included in an amount of 85 parts by weight or less on the basis of 100 parts by weight of the positive electrode active material. The secondary particles may be included in an amount of 80 parts by weight or less, 75 parts by weight or less, or 70 parts by weight or less on the basis of 100 parts by weight of the positive electrode active material. The secondary particles may be included in an amount of 0 part by weight or more on the basis of 100 parts by weight of the positive electrode active material.

When the above range is satisfied, the above-described effects due to the existence of the single particles in the positive electrode active material can be maximized. In the case in which the positive electrode active material of the secondary particles is included, the components thereof may be the same as or different from those exemplified in the single-particle positive electrode active material described above, and may mean an aggregate form of single particles.

In the exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)^{2-}$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**<Example 1>**

**Preparation of Negative Electrode**

After silane gasification of a lump of silicon, which is MG-Si, a silicon-based active material was formed on a substrate through deposition by a chemical reaction. In this case, through process condition control (temperature condition ranging from 800°C to 1100°C, pressure condition ranging from 10 pa to 150 pa), it was possible to control the crystal grain size of the silicon-based active material, and as a result, a silicon-based active material with a crystal grain size of 62 nm was prepared.

Thereafter, a negative electrode composition was formed using the silicon-based active material (Si, average particle diameter (D50): 3.5 um, crystal grain size: 62 nm), the first conductive material, the second conductive material, and polyacrylamide as the binder at a weight ratio of 80:9.6:0.4:10, and then added to distilled water as a solvent for forming the negative electrode slurry, resulting in preparation of a negative electrode slurry.

The first conductive material was plate-like graphite (specific surface area: 17 m$^2$/g, average particle diameter (D50): 3.5 um, ratio of D50 to thickness: 28%) and the second conductive material was SWCNT (number of walls: 1ea, average particle diameter: 1.6 um, BET 1160m$^2$/g, IG/ID ratio: 143).

As a specific mixing method, after dispersing the conductive materials, the binder and water at 2500 rpm for 30 minutes with a homo mixer, the silicon-based active material was added to the dispersion, which was then dispersed at 2500 rpm for 30 minutes to fabricate a negative electrode slurry.

The negative electrode slurry was coated on both surfaces of a copper current collector (thickness: 8 um) serving as a negative electrode current collector layer with a loading amount of 85 mg/25 cm$^2$, which was then roll-pressed and dried in a vacuum oven at 130°C for 10 hours to form a negative electrode active material layer (thickness: 33 um), whereby a negative electrode was prepared (thickness of negative electrode: 41 um, porosity of negative electrode: 40.0%).

**<Example 2>**

In Example 1, after silane gasification of a lump of silicon, which is MG-Si, a silicon-based active material was formed on a substrate through deposition by a chemical reaction. In this case, through process condition control (temperature condition ranging from 800°C to 1100°C, pressure condition ranging from 10 pa to 150 pa), it was possible to control the crystal grain size of the silicon-based active material, and as a result, the same process as in Example 1 was performed, except that a silicon-based active material with a crystal grain size of 30 nm was prepared.

**<Example 3>**

In Example 1, after silane gasification of a lump of silicon, which is MG-Si, a silicon-based active material was formed on a substrate through deposition by a chemical reaction. In this case, through process condition control (temperature condition ranging from 800°C to 1100°C, pressure condition ranging from 10pa to 150pa), it was possible to control the crystal grain size of the silicon-based active material, and as a result, the same process as in Example 1 was performed, except that a silicon-based active material with a crystal grain size of 90 nm was prepared.

**<Comparative Example 1>**

In Example 1, the cooling and gas deposition environments were changed when preparing a lump of silicon, which is MG-Si. Thereafter, a negative electrode was prepared in the same manner as in Example 1, except that the lump was pulverized using physical force, and as a result, a silicon-based active material with a crystal grain size of 212 nm was prepared and a silicon-based active material satisfying the above crystal grain size was used.

**<Comparative Example 2>**

A negative electrode was prepared in the same manner as in Example 1, except that, in Example 1, a negative electrode composition was formed using the silicon-based active material (Si, average particle diameter (D50): 3.5 um, crystal grain size: 62 nm), a particulate conductive material (carbon black), and polyacrylamide as a binder at a weight ratio of 80:10:10.

**<Comparative Example 3>**

A negative electrode was prepared in the same manner as in Example 1, except that, in Example 1, a negative electrode composition was formed using the silicon-based active material (Si, average particle diameter (D50): 3.5 um, crystal grain size: 62 nm), a first conductive material, and polyacrylamide as a binder at a weight ratio of 80:10:10.

**<Comparative Example 4>**

A negative electrode was prepared in the same manner as in Example 1, except that, in Example 1, a negative electrode composition was formed using the silicon-based active material (Si, average particle diameter (D50): 3.5 um, crystal grain size: 62 nm), a second conductive material, and polyacrylamide as a binder at a weight ratio of 84:0.5:15.5.

**<Comparative Example 5>**

A negative electrode was prepared in the same manner as in Example 1, except that, in Example 1, a particulate conductive material (carbon black) was used as a conductive material, instead of the first conductive material.

**<Comparative Example 6>**

A negative electrode was prepared in the same manner as in Example 1, except that, in Example 1, a negative electrode composition was formed using the silicon-based active material (Si, average particle diameter (D50): 3.5 um, crystal grain size: 62 nm), a particulate conductive material (carbon black), a first conductive material, and polyacrylamide as a binder at a weight ratio of 80:5:5:10.

**<Preparation of Secondary Battery>**

A positive electrode slurry (solid concentration: 78 wt%) was prepared by adding $LiNi_{0.e}Co_{0.2}Mn_{0.2}O_2$ (average particle diameter (D50): 15 um) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated on both surfaces of an aluminum current collector (thickness: 12 um) serving as a positive electrode current collector with a loading amount of 537 mg/25 cm$^2$, which was then roll-pressed and dried in a vacuum oven at 130°C for 10 hours to form a positive electrode active material layer (thickness: 65 um), whereby a positive electrode was prepared (thickness of the positive electrode: 77 um, porosity: 26%) .

A lithium secondary battery was prepared by interposing a polyethylene separator between the positive electrode and each of the negative electrodes of the Examples and the Comparative Examples and injecting an electrolyte.

The electrolyte was obtained by adding vinylene carbonate to an organic solvent, in which fluoroethylene carbonate (FEC) and diethyl carbonate (DEC) were mixed at a volume ratio of 30:70, in an amount of 3 wt% on the basis of a total weight of the electrolyte and adding $LiPF_6$ as a lithium salt to a concentration of 1M.

**<Experimental Example>**

**Experimental Example 1: Life Evaluation**

For the lithium secondary batteries including the negative electrodes prepared in the Examples and Comparative Examples, the life and capacity retention rate were evaluated using an electrochemical charging and discharging device. The in-situ cycle test was conducted on the secondary battery at 4.2-3.2 V 1 C/1 C, and during the test, 1 C/1 C charging/discharging (4.2-3.2 V) was performed every 50 cycles to measure the capacity retention rate, and results thereof are listed in Table 1.

capacity retention rate (%)={(discharge capacity in the Nth cycle)/(discharge capacity in the first cycle)}$\times$100

**Experimental Example 2: Evaluation of Resistance Increase Rate Measurement**

In in Experimental Example 1, during the test, the capacity retention rate was measured by charging/discharging (4.2-3.0V) the battery at 0.33C/0.33C every 50 cycles, and then the resistance increase rate was compared and analyzed by discharging the battery with a pulse of 2.5C at SOC50 to measure the resistance. Results are shown in Table 1 below.

**Experimental Example 3: Volume Variation Due to Gas Generation Using Pouch Test**

After fully charging a pouch cell with a capacity of 1Ah at 0.33C to 4.2V for the lithium secondary batteries including the negative electrodes prepared in the Examples and Comparative Examples, the batteries were stored in the oven at 60°C for 8 weeks. Thereafter, after full discharge to 2.5V, the gas generated in the pouch cell was extracted using a GC/MS method and gas quantitative analysis was performed, and results thereof are listed in Table 1 below.

[Table 1]

| | Capa. Retention@500th 1C/1C Cycle, 4.2-3.2V @25°C | Resistance Increase % @500th 1C/1C Cycle, 4.2-3.2V @25°C | Gas volume after storage test (mL/Ah) |
|---|---|---|---|
| Example 1 | 220th | 20% | 3700 |
| Example 2 | 250th | 10% | 3700 |
| Example 3 | 190th | 40% | 3700 |
| Comparative Example 1 | 170th | 130% | 3700 |
| Comparative Example 2 | 80th | 250% | 4000 |
| Comparative Example 3 | 50th | 330% | 2300 |
| Comparative Example 4 | 130th | 170% | 1400 |
| Comparative Example 5 | 130th | 165% | 5400 |
| Comparative Example 6 | 50th | 300% | 6300 |

As can be seen in the Examples and Comparative Examples, the negative electrode composition of the present invention uses the grain silicon-based active material within a specific range for increase in energy density to fabricate a negative electrode. In this case, it could be confirmed that for the negative electrode conductive material, the planar conductive material and the linear conductive material were used to greatly improve the electrical connectivity between the silicon-based active materials, resulting in preventing the electrical isolation phenomenon, which may occur when charging/discharging the negative electrode to which the silicon-based active material is applied, to improve the life of the negative electrode.

In the case of Comparative Example 1 in which the crystal grain size was outside the range according to the present application, it could be confirmed that the strength of the silicon-based active material itself deteriorated to make it difficult to provide flexibility when included in the electrode, and the volume expansion could not be suppressed, resulting in a decrease in life performance and an increase in resistance.

In the case of Comparative Example 2 in which an excessive amount of particulate conductive material was included, there was room for improvement in life performance, but a high resistance increase rate was observed, and problems of increases in viscosity of the composition and amount of gas generation at high temperatures due to the high specific surface area occurred.

In the case of Comparative Examples 3 to 6 in which the crystal grain sizes were the same, but the planar and linear conductive materials were not used, unlike the present invention, it could be confirmed that the electrical connectivity could not be secured, resulting in poor life performance and high resistance increase rate.

In the case of Comparative Examples 2, 5, and 6 in which the particulate conductive material was used alone and the particulate and linear conductive materials or the particulate and planar conductive materials were used in combination, it could be confirmed that the particulate conductive material was included, resulting in the larger amounts of gas generation at high temperatures, as compared with the other Examples and Comparative Examples.

That is, the main feature of the negative electrode composition according to the present application is that the negative electrode conductive material having specific composition and content as described above is applied, leading to the construction of a system that can be applied together with the silicon-based active material with a high energy density.

**Claims**

1. A negative electrode composition comprising:

   a silicon-based active material;
   a negative electrode conductive material; and
   a negative electrode binder,
   wherein the silicon-based active material comprises one or more selected from the group consisting of SiOx (x=0) and SiOx (0<x<2), and includes 70 parts by weight or more of SiOx (x=0) on the basis of 100 parts by weight of the silicon-based active material,
   wherein the silicon-based active material has a crystal grain size of 200 nm or less, and
   wherein the negative electrode conductive material comprises a planar conductive material and a linear conductive material.

2. The negative electrode composition of claim 1,
   wherein the silicon-based active material has a crystal grain size of 10 nm or greater and 150 nm or less.

3. The negative electrode composition of claim 1,
   wherein a D50 particle size of the silicon-based active material is 3 um or greater and 10 um or less.

4. The negative electrode composition of claim 1,
   wherein a specific surface area of the silicon-based active material is 0.25 $m^2$/g or greater.

5. The negative electrode composition of claim 1,
   wherein the negative electrode composition has a viscosity of 1,000 cP or higher and 6,000 cP or less.

6. The negative electrode composition of claim 1,
   wherein the silicon-based active material is included in an amount of 60 parts by weight or more on the basis of 100 parts by weight of the negative electrode composition.

7. The negative electrode composition of claim 1,
   wherein the negative electrode conductive material is included in an amount of 10 part by weight or more and 40 parts by weight or less on the basis of 100 parts by weight of the negative electrode composition.

8. The negative electrode composition of claim 1,
   wherein the negative electrode conductive material includes 90 parts by weight or more and 99.9 parts by weight or less of the planar conductive material and 0.1 part by weight or more and 10 parts by weight or less of the linear conductive material on the basis of 100 parts by weight of the negative electrode conductive material.

9. The negative electrode composition of claim 1,
   wherein the planar conductive material has D10 of 0.5 um or greater and 1.5 um or less, D50 of 2.5 um or greater and 6.0 um or less, and D90 of 7.0 um or greater and 15.0 um or less.

10. A negative electrode for a lithium secondary battery comprising:

a negative electrode current collector layer; and
a negative electrode active material layer comprising the negative electrode composition of any one of claims 1 to 9 formed on one surface or both surfaces of the current collector layer.

11. The negative electrode for a lithium secondary battery of claim 10, wherein a thickness of the negative electrode current collector layer is 1 um or greater and 100 um or less, and
wherein a thickness of the negative electrode active material layer is 20 um or greater and 500 um or less.

12. A lithium secondary battery comprising:

a positive electrode;
the negative electrode for a lithium secondary battery of claim 10;
a separator provided between the positive electrode and the negative electrode; and
an electrolyte.

[Figure 1]

[Figure 2]

[Figure 3]

## INTERNATIONAL SEARCH REPORT

| International application No. |
|---|
| **PCT/KR2023/014353** |

| A. | CLASSIFICATION OF SUBJECT MATTER |
|---|---|

**H01M 4/48**(2010.01)i; **H01M 4/38**(2006.01)i; **H01M 4/62**(2006.01)i; **H01M 10/0525**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/48(2010.01); C01B 32/05(2017.01); C01B 32/963(2017.01); H01M 10/052(2010.01); H01M 4/02(2006.01); H01M 4/134(2010.01); H01M 4/36(2006.01); H01M 4/38(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 (anode), 실리콘 (silicon), 결정립 (crystal grain), 도전재 (conductive agent), 바인더 (binder), 에너지 밀도 (energy density), 흑연 (graphite)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2021-0058172 A (LG CHEM, LTD.) 24 May 2021 (2021-05-24)<br>See abstract; and paragraphs [0019]-[0021], [0051]-[0054] and [0078]-[0088]. | 1-12 |
| Y | JP 2009-245773 A (SANYO ELECTRIC CO., LTD.) 22 October 2009 (2009-10-22)<br>See abstract; paragraphs [0008], [0010], [0023]-[0026] and [0034]; and claims 1-2. | 1-12 |
| A | KR 10-2020-0019394 A (UNIST(ULSAN NATIONAL INSTITUTE OF SCIENCE AND TECHNOLOGY)) 24 February 2020 (2020-02-24)<br>See entire document. | 1-12 |
| A | KR 10-2020-0092370 A (BTR NEW MATERIAL GROUP CO., LTD.) 03 August 2020 (2020-08-03)<br>See entire document. | 1-12 |
| A | JP 2010-073651 A (TOSHIBA CORP.) 02 April 2010 (2010-04-02)<br>See entire document. | 1-12 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 January 2024** | **15 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014353**

| Patent document cited in search report | | | Publication date (day/month/year) | Patent family member(s) | | | Publication date (day/month/year) |
|---|---|---|---|---|---|---|---|
| KR | 10-2021-0058172 | A | 24 May 2021 | None | | | |
| JP | 2009-245773 | A | 22 October 2009 | JP | 5361233 | B2 | 04 December 2013 |
| KR | 10-2020-0019394 | A | 24 February 2020 | CN | 112602210 | A | 02 April 2021 |
| | | | | EP | 3840088 | A1 | 23 June 2021 |
| | | | | EP | 3840088 | A4 | 11 May 2022 |
| | | | | JP | 2022-508339 | A | 19 January 2022 |
| | | | | JP | 2023-107873 | A | 03 August 2023 |
| | | | | KR | 10-2131262 | B1 | 05 August 2020 |
| | | | | US | 2021-0328219 | A1 | 21 October 2021 |
| | | | | WO | 2020-036397 | A1 | 20 February 2020 |
| KR | 10-2020-0092370 | A | 03 August 2020 | CN | 108054368 | A | 18 May 2018 |
| | | | | CN | 108054368 | B | 11 August 2020 |
| | | | | CN | 113594455 | A | 02 November 2021 |
| | | | | CN | 113594455 | B | 24 March 2023 |
| | | | | EP | 3726630 | A1 | 21 October 2020 |
| | | | | EP | 3726630 | B1 | 28 June 2023 |
| | | | | JP | 2020-510960 | A | 09 April 2020 |
| | | | | JP | 2021-182554 | A | 25 November 2021 |
| | | | | JP | 6928101 | B2 | 01 September 2021 |
| | | | | JP | 7175355 | B2 | 18 November 2022 |
| | | | | KR | 10-2023-0008225 | A | 13 January 2023 |
| | | | | KR | 10-2480641 | B1 | 22 December 2022 |
| | | | | KR | 10-2547081 | B1 | 23 June 2023 |
| | | | | US | 11515530 | B2 | 29 November 2022 |
| | | | | US | 2020-0280061 | A1 | 03 September 2020 |
| | | | | US | 2023-0106786 | A1 | 06 April 2023 |
| | | | | WO | 2019-114556 | A1 | 20 June 2019 |
| JP | 2010-073651 | A | 02 April 2010 | JP | 5503858 | B2 | 28 May 2014 |
| | | | | US | 2010-0075227 | A1 | 25 March 2010 |

Form PCT/ISA/210 (patent family annex) (July 2022)

**EP 4 451 384 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220119283
- KR 1020230126086
- JP 2009080971 A